# EUROPÄISCHE PATENTSCHRIFT

(11) **EP 4 238 903 B1**
(45) Veröffentlichungstag und Bekanntmachung des Hinweises auf die Patenterteilung: **07.05.2025**
(21) Anmeldenummer: 22160002.6
(22) Anmeldetag: 03.03.2022
(51) Int. Cl.: B65G 1/04, B65G 57/30, E04B 1/19, E04B 1/24

(54) **BLOCKLAGERANORDNUNG**
BLOCK STORAGE ARRANGEMENT
ARRANGEMENT D'ENTREPÔT EN BLOC

(43) Veröffentlichungstag der Anmeldung: 06.09.2023
(73) Patentinhaber: Jungheinrich Aktiengesellschaft, 22047 Hamburg (DE)
(72) Erfinder: Becker, Michael, 63512 Hainburg (DE); Cavelius, Jörg, 61118 Bad Vilbel (DE); Morawietz, Timm, 66636 Tholey-Überroth (DE); Liebhaber, Markus, 61440 Oberursel (DE)
(74) Vertreter: Keil & Schaafhausen Patentanwälte PartGmbB

(56) Entgegenhaltungen:
- EP-A1- 3 782 928
- EP-A1- 3 782 930
- BE-A- 661 864
- CN-A- 105 501 953
- DE-B1- 2 116 707

## Beschreibung

Die vorliegende Erfindung betrifft eine Blocklageranordnung mit den Merkmalen des Oberbegriffs des Anspruchs 1.

Eine derartige Blocklageranordnung ist beispielsweise aus EP 3 782 930 A1 bekannt.

Eine ähnliche Blocklageranordnung ist aus EP 3 782 928 A1 bekannt.

Eine Blocklageranordnung dient dazu, eine große Anzahl von Behältern zu lagern. Die Behälter können hierbei in Form von Stapeln angeordnet werden, wobei jeder Behälterstapel in einem Behälteraufnahmeraum angeordnet ist. Das Einlagern eines Behälters in einem Behälteraufnahmeraum erfolgt in Schwerkraftrichtung von unten durch den Beschickungsraum, wobei hierzu ein Beschickungsfahrzeug verwendet wird. In gleicher Weise erfolgt auch die Entnahme eines Behälters aus dem Behälteraufnahmeraum in Schwerkraftrichtung nach unten durch das Beschickungsfahrzeug.

Die Rahmenanordnung trennt die Behälteraufnahmeräume vom Beschickungsraum. Sie hat dabei mehrere Aufgaben. Zum einen muss sie der Blocklageranordnung eine gewisse mechanische Stabilität verschaffen, damit die Behälter in den Behälteraufnahmeräumen mit ausreichender Sicherheit gehalten werden. Zum anderen wird sie vielfach auch verwendet, um eine Halteeinrichtung aufzunehmen, die den jeweils untersten Behälter eines Stapels von Behältern in dem Behälteraufnahmeraum hält.

Eine Blocklageranordnung und die darin aufgenommenen Behälter müssen aneinander angepasst sein. Wenn die Behälteraufnahmeräume eine zu große Grundfläche haben, geht zu viel Platz verloren. Darüber hinaus ist es schwierig, die Behälter in den Behälteraufnahmeräumen in Schwerkraftrichtung unten festzuhalten. Wenn die Behälter zu groß sind, dann lassen sie sich nicht in den Behälteraufnahmeräumen einlagern.

BE 661 864 A offenbart ein Gestell aus Stäben 1 und würfelförmigen Verbindungsgliedern. Jeweils vier Stäbe sind zu einer Gruppe zusammengefasst. Die Gruppe weist an ihren beiden Enden eine quadratische Platte mit einer mittigen Bohrung auf. Damit können mehrere Gruppen in Längsrichtung der Stäbe miteinander verbunden werden. Die würfelförmigen Verbindungsglieder können verwendet werden, um weitere Stäbe an den Stäben quer zur Längserstreckung der Stäbe zu befestigen.

DE 2 116 707 B1 zeigt eine Knotenverbindung für zerlegbare Fachwerkkonstruktionen, bei der ein würfelförmiges Knotenstück an seinen sechs Seiten jeweils ein Eingriffsloch mit Innengewinde aufweist, in das eine Kopfschraube eingeschraubt werden kann, die aus einer Stirnseite eines Hohlstabes herausragt.

CN 105501953 A zeigt eine Trenn- und Zuführvorrichtung für mechanische Werkstücke mit einer Trägerplattform und einer Zuführeinrichtung oberhalb der Trägerplattform. Zwischen der Trägerplattform und der Zuführeinrichtung ist eine Transportplattform angeordnet. In der Zuführeinrichtung sind mehrere Arme vorgesehen, die in eine Öffnung, die zwischen Rahmenteilen gebildet ist, hineingeschwenkt werden können, um ein Werkstück zu halten.

Der Erfindung liegt die Aufgabe zugrunde, eine flexible Lösung für die Rahmenanordnung zu schaffen.

Diese Aufgabe wird bei einer Blocklageranordnung mit den Merkmalen des Anspruchs 1 gelöst

Man trennt hierbei also zwischen den Knotenelementen, die an den Ecken der Behälteraufnahmeräume angeordnet sind, und den Trägern, die benachbarte Knotenelemente miteinander verbinden. Vier Knotenelemente mit vier Trägern bilden dann ein Rechteck, wobei eine Vielzahl derartiger Rechtecke dann die Rahmenanordnung bilden. Das Rechteck bildet dann auch gleichzeitig eine Öffnung, durch die Behälter in Schwerkraftrichtung von unten aus dem Beschickungsraum in den Behälteraufnahmeraum bewegt werden können oder umgekehrt von dem Behälteraufnahmeraum nach unten in den Beschickungsraum gelangen können. Da die Knotenelemente und die Träger voneinander getrennt sind, kann man durch eine Wahl von anderen Trägern relativ schnell eine Anpassung an andere Behältergrößen erzielen. Die Träger können dabei als ebene Elemente ausgebildet sein, beispielsweise als Bleche, so dass ihre Herstellung relativ einfach ist und man eine Änderung der Geometrie mit geringem Aufwand erreichen kann. Die Knotenelemente können unabhängig von der Größe der Grundfläche der Behälteraufnahmeräume verwendet werden, so dass die gleichen Knotenelemente bei unterschiedlichen Ausführungsformen von Blocklageranordnungen verwendet werden können.

Zwischen benachbarten Behälteraufnahmeräumen ist ein Ständer angeordnet, wobei ein Knotenelement eine Aufstandseinrichtung für den Ständer bildet. Die Ständer dienen dazu, einen Behälterstapel zu stabilisieren, der in einem Behälteraufnahmeraum angeordnet ist. Es ist hierbei nicht unbedingt erforderlich, dass an jeder Ecke des Behälteraufnahmeraums ein Ständer angeordnet ist. In vielen Fällen reicht es aus, wenn an aneinander diagonal gegenüberliegenden Ecken des Behälteraufnahmeraumes ein Ständer angeordnet ist. Das Knotenelement bildet dann sozusagen die Basis für den Ständer. Da das Knotenelement stabil genug ist, um die notwendigen Kräfte aufnehmen zu können, ist durch das Knotenelement eine ausreichende Stabilität gegeben.

Zwischen jedem Behälteraufnahmeraum und dem Beschickungsraum ist eine Behälterhaltevorrichtung angeordnet, die eine um eine horizontale Achse verschwenkbare Klappe aufweist, wobei die Klappe in einem Knotenelement gelagert ist. Das Knotenelement übernimmt damit eine weitere Aufgabe. Es dient zur Aufnahme zumindest eines Teils der Behälterhaltevorrichtung.

Vorzugsweise ist ein Knotenelement in eine erste Richtung über einen ersten Träger mit einem benachbarten Knotenelement verbunden und ist in eine zweite Richtung über einen zweiten Träger mit einem anderen benachbarten Knotenelement verbunden. Die beiden Träger müssen dabei nicht gleich ausgebildet sein. Man kann über eine Variation der Träger eine hohe Flexibilität erreichen.

Hierbei ist besonders bevorzugt, dass der erste Träger länger und dünner ist als der zweite Träger. Die vier Knotenelemente sind dann an den Ecken eines Rechtecks mit einer Längsseite und einer Querseite angeordnet. An der Längsseite sind die ersten Träger und an der Querseite sind die zweiten Träger angeordnet. Da der zweite Träger verwendet wird, um die Blocklageranordnung auf einem Fußboden abzustützen, ist er dicker und damit stabiler als der erste Träger.

Vorzugsweise weist das Knotenelement für jeden Träger einen Arm auf und der Träger ist mit dem Arm verbunden. Der Arm des Knotenelements bildet dann einen Teil der Längs- oder Querseite des Rechtecks. Auf diese Weise lässt sich eine relativ hohe Stabilität erzielen.

Vorzugsweise weist das Knotenelement an mindestens einem Arm eine Führung für den Träger auf. Dies erleichtert die Montage. Der Träger kann mit Hilfe der Führung am Knotenelement ausgerichtet und dann mit dem Knotenelement verbunden werden.

Vorzugsweise weist der Träger eine Träger-Stirnseite auf, die mit einer Arm-Stirnseite des Arms verbunden ist. Die Verbindung zwischen Träger und Knotenelement erfolgt dann stirnseitig. Damit gibt es keine überstehenden oder überlappenden Teile, die bei der Montage oder im Betrieb der Blocklageranordnung stören könnten.

Vorzugsweise weist der Träger mindestens eine langlochartige Durchgangsöffnung auf, die sich im Wesentlichen in Längsrichtung des Trägers erstreckt, wobei ein Fügeelement durch einen Steg zwischen der Durchgangsöffnung und der Träger-Stirnseite geführt ist. Damit ist es möglich, das Fügeelement so zu montieren, dass es nicht über den Träger oder über das Knotenelement übersteht. Das Fügeelement behindert also später nicht den Betrieb der Blocklageranordnung.

Vorzugsweise weist das Knotenelement einen Korpus auf, der als Gussteil ausgebildet ist. Ein Gussteil lässt sich relativ einfach herstellen und weist die notwendige mechanische Stabilität auf.

Vorzugsweise weist das Knotenelement eine Aufstandsfläche mit einer Bohrung auf. Der Ständer steht auf der Aufstandsfläche auf. Die Bohrung bildet einen Durchgangskanal, durch den Leitungen oder andere Funktionselemente geführt werden können.

Vorzugsweise weist das Knotenelement an seiner in Schwerkraftrichtung unteren Seite eine Öffnung auf, durch die hindurch ein Klappenbetätigungsmechanismus auf die Klappe wirkt. Das Knotenelement erlaubt zum Beispiel den Durchtritt eines Haltefingers, der die Klappe offenhält, wenn ein Behälterstapel abgesenkt wird, um einen Behälter zu übernehmen. Die Klappe erlaubt auch den Durchtritt eines Elements, das eine Öffnung der Klappe bewirkt. Die Öffnung ist an den jeweiligen Klappenbetätigungsmechanismus angepasst. Vorzugsweise ist die Klappe durch ein im Knotenelement befestigtes Klappenhalteelement im Knotenelement gehalten, das eine Ausnehmung aufweist, die die die Klappe aufnimmt, wenn die Klappe aus einer Halteposition in eine Freigabeposition verschwenkt ist. Wenn sich die Klappe in ihrer Freigabeposition befindet, dann gibt es vereinfacht ausgedrückt eine glatte Fläche, an der entlang ein Behälter gleiten kann. Die Klappe steht nicht vor, so dass ein Verhaken des Behälters an der Klappe verhindert werden kann, wenn der Behälter aus dem Behälteraufnahmeraum herausgenommen werden soll.

Vorzugsweise bildet das Klappenhalteelement ein Widerlager für eine auf die Klappe wirkende Schließfeder. Die Schließfeder belastet die Klappe in eine Richtung, in der sie in eine Öffnung zwischen dem Behälteraufnahmeraum und dem Beschickungsraum hineinragt. Wenn das Klappenhalteelement auch ein Widerlager für die Schließfeder bildet, wird die Montage der Klappe mit allen ihren Funktionalitäten relativ einfach.

Vorzugsweise steht das Klappenhalteelement über mindestens eine Stirnseite über. Das Klappenhalteelement bildet dann eine Führung, an der ein Träger zur Anlage gebracht werden kann, um ihn an dem Knotenelement auszurichten.

Die Erfindung wird im Folgenden anhand eines bevorzugten Ausführungsbeispiels in Verbindung mit der Zeichnung beschrieben. Hierin zeigen:
- Fig. 1: eine stark schematisierte Darstellung einer Blocklageranordnung,
- Fig. 2: einen Teil einer Rahmenanordnung,
- Fig. 3: ein Knotenelement in perspektivischer Darstellung und

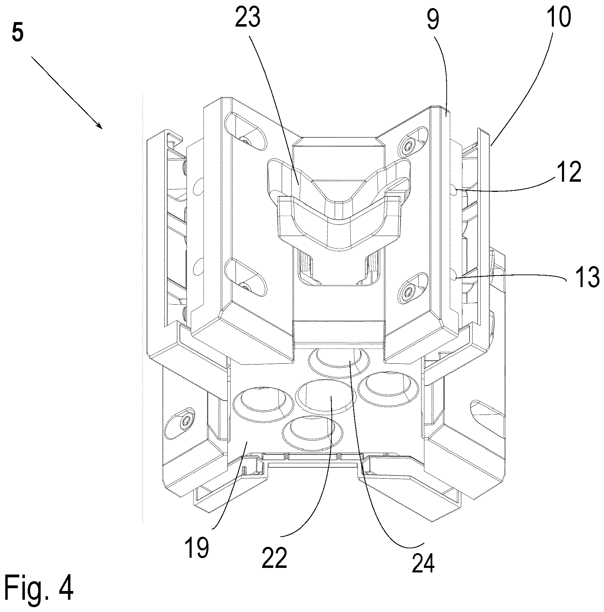

- Fig. 4: das Knotenelement in perspektivischer Darstellung von unten.

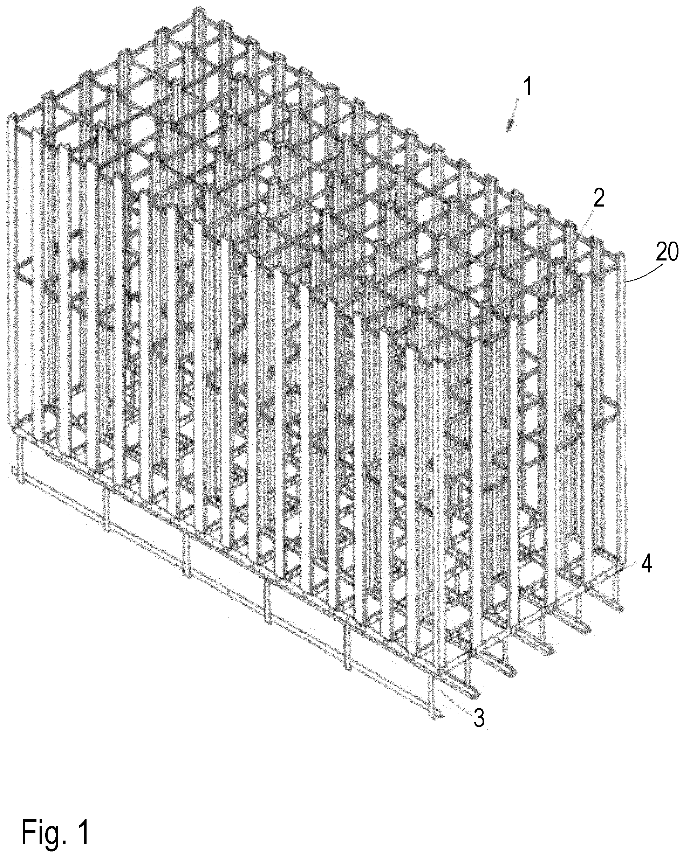

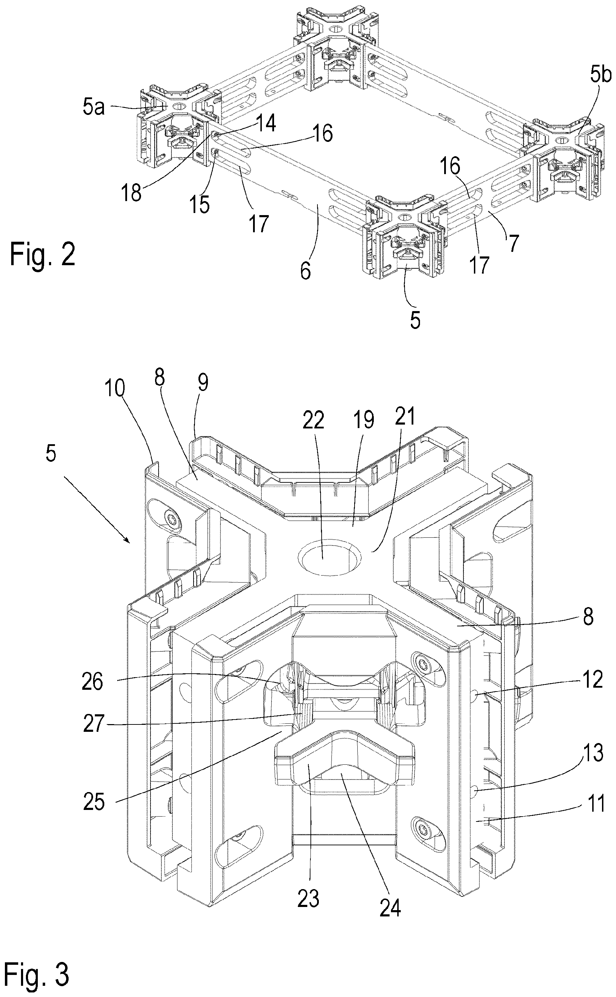

Fig. 1 zeigt stark schematisiert eine Blocklageranordnung mit mehreren Behälteraufnahmeräumen 2 und einem unter den Behälteraufnahmeräumen angeordneten Beschickungsraum 3. Eine Rahmenanordnung 4 ist zwischen den Behälteraufnahmeräumen 2 und dem Beschickungsraum 3 angeordnet. Fig. 2 zeigt einen Teil dieser Rahmenanordnung 4.

Die Rahmenanordnung 4 weist Knotenelemente 5 (Fig. 2 und 3) auf, die an Ecken der Behälteraufnahmeräume angeordnet sind, wobei jeweils zwei benachbarte Knotenelemente 5 lösbar mit einem gemeinsamen Träger 6, 7 verbunden sind.

Die Knotenelemente 5 sind alle gleich aufgebaut. Bei den Trägern gibt es hingegen erste Träger 6, die ein Knotenelement 5 in eine erste Richtung mit einem benachbarten Knotenelement 5a verbinden, und zweite Träger 7, die das Knotenelement 5 mit einem anderen benachbarten Knotenelement 5b in eine zweite Richtung verbinden.

Die ersten Träger 6 sind länger als die zweiten Träger 7. Die ersten Träger 6 sind beispielsweise dünner als die zweiten Träger 7.

Die ersten Träger 6 und die zweiten Träger 7 sind als Bleche ausgebildet, die beispielsweise eine Dicke im Bereich von 5 mm bis 30 mm aufweisen.

Das Knotenelement 5 weist für jeden Träger einen Arm 8 auf, und der Träger 6, 7 ist mit dem Arm 8 verbunden. Das Knotenelement 5 weist an mindestens einem Arm 8 eine Führung 9, 10 für den Träger 6, 7 auf. Die Führung 9, 10 erleichtert es, den jeweiligen Träger 6, 7 an dem Knotenelement 5 zu positionieren und erleichtert damit die Montage des Trägers 6, 7 am Knotenelement 5. Jeder Träger 6, 7 weist eine Träger-Stirnseite auf, die mit einer Arm-Stirnseite 11 (Fig. 3) des Arms 8 verbunden ist. In der Arm-Stirnseite sind zwei Bohrungen 12, 13 angeordnet, die mit einem Innengewinde versehen sein können, so dass der Träger 6, 7 mit Hilfe von Schrauben 14, 15 als Fügeelemente verbunden werden können. Um die Schrauben montieren zu können, weist jeder Träger 6, 7 für jedes Fügeelement eine langlochartige Durchgangsöffnung 16, 17 auf. Die langlochartigen Durchgangsöffnungen 16, 17 erstrecken sich in Längsrichtung des Trägers 6, 7 und die Schrauben 14, 15, sind durch einen Steg 18 zwischen der Durchgangsöffnung 16, 17 und der Träger-Stirnseite geführt. Die Schrauben 14, 15 sind dabei so ausgebildet, dass sie nicht seitlich über die Träger 6, 7 überstehen. Eine andere Art der Befestigung ist auch möglich, beispielsweise eine Gewindebohrung im Träger 6, 7 und eine entsprechende Öffnung im Knotenelement 5, durch das ein Fügeelement geführt werden kann.

Das Knotenelement 5 weist einen Korpus 19 auf, der bevorzugterweise als Gussteil ausgebildet ist. Das Gussteil kann beispielsweise als Stahlguss, Aluminiumguss, Sphäroguss oder Edelstahlguss ausgebildet sein.

Zwischen benachbarten Behälteraufnahmeräumen 2 ist ein Ständer 20 (Fig. 1) angeordnet, der auf dem Knotenelement 5 aufsteht. Das Knotenelement 5 bildet damit eine Aufstandseinrichtung für den Ständer 20. Hierzu weist das Knotenelement 5 eine Aufstandsfläche 21 mit einer Bohrung 22 auf. Die Bohrung 22 kann verwendet werden, um Leitungen oder andere Funktionselemente hindurch und durch den Ständer 20 zu führen.

Zwischen jedem Behälteraufnahmeraum 2 und dem Beschickungsraum 3 ist eine Behälterhaltevorrichtung angeordnet, die eine um eine horizontale Achse verschwenkbare Klappe 23 aufweist, wobei die Klappe in einem Knotenelement 5 gelagert ist. In vielen Fällen wird man an allen vier Ecken eines Behälteraufnahmeraums 2 eine derartige Klappe 23 vorsehen. Dies ist aber nicht unbedingt erforderlich. In manchen Fällen wird es ausreichen, an zwei einander diagonal gegenüberliegenden Ecken eine derartige Klappe 23 vorzusehen.

Das Knotenelement 5 weist an seiner in Schwerkraftrichtung unteren Seite eine Öffnung 24 auf, durch die hindurch ein Klappenbetätigungsmechanismus (nicht dargestellt) auf die Klappe 23 wirkt. Das Knotenelement 5 kann dann gleichzeitig eine Führung für den Klappenbetätigungsmechanismus bilden. Die Position der Öffnung richtet sich nach der Art des verwendeten Klappenbetätigungsmechanismus.

Die Klappe 23 ist durch ein im Knotenelement 5 befestigtes Klappenhalteelement 25 im Knotenelement 5 gehalten. Das Klappenhalteelement 25 weist eine Ausnehmung 26 auf, die an die Form der Klappe 23 angepasst ist und die Klappe 23 aufnimmt, wenn die Klappe 23 aus einer Halteposition (in Fig. 3 dargestellt) in eine Freigabeposition verschwenkt ist. In der Freigabeposition ist die Klappe 23 etwa rechtwinklig zu der in Fig. 3 dargestellten Halteposition nach oben verschwenkt worden.

Das Klappenhalteelement 25 kann ein Widerlager für eine auf die Klappe 23 wirkende Schließfeder 27 bilden.

Das Klappenhalteelement 25 steht über mindestens eine Stirnseite 11 über und bildet damit die oben bereits beschriebene Führung 9, 10 für die Träger 6, 7.

## Patentansprüche

1. Blocklageranordnung (1) mit mehreren Behälteraufnahmeräumen (2), einem unter den Behälteraufnahmeräumen (2) angeordneten Beschickungsraum (3) und einer Rahmenanordnung (4) zwischen den Behälteraufnahmeräumen (2) und dem Beschickungsraum (3), wobei zwischen benachbarten Behälteraufnahmeräumen (2) ein Ständer (20) angeordnet ist und zwischen jedem Behälteraufnahmeraum (2) und dem Beschickungsraum (3) eine Behälterhaltevorrichtung angeordnet ist, die eine um eine horizontale Achse verschwenkbare Klappe (23) aufweist, **dadurch gekennzeichnet, dass** die Rahmenanordnung (4) Knotenelemente (5) aufweist, die an Ecken der Behälteraufnahmeräume (2) angeordnet sind, wobei ein Knotenelement (5) eine Aufstandseinrichtung für den Ständer (20) bildet, jeweils zwei benachbarte Knotenelemente (5) lösbar mit einem gemeinsamen Träger (6, 7) verbunden sind und die Klappe (23) in einem Knotenelement (5) gelagert ist.

2. Blocklageranordnung nach Anspruch 1, **dadurch gekennzeichnet, dass** ein Knotenelement (5) in eine erste Richtung über einen ersten Träger (6) mit einem benachbarten Knotenelement (5a) verbunden ist und in eine zweite Richtung über einen zweiten Träger (7) mit einem anderen benachbarten Knotenelement (5b) verbunden ist.

3. Blocklageranordnung nach Anspruch 2, **dadurch gekennzeichnet, dass** der erste Träger (6) länger und dünner ist als der zweite Träger (7).

4. Blocklageranordnung nach einem der Ansprüche 1 bis 3, **dadurch gekennzeichnet, dass** das Knotenelement (5) für jeden Träger (6, 7) einen Arm (8) aufweist und der Träger (6, 7) mit dem Arm (8) verbunden ist.

5. Blocklageranordnung nach Anspruch 4, **dadurch gekennzeichnet, dass** das Knotenelement (5) an mindestens einem Arm (8) eine Führung (9, 10) für den Träger (6, 7) aufweist.

6. Blocklageranordnung nach Anspruch 4 oder 5, **dadurch gekennzeichnet, dass** der Träger (6, 7) eine Träger-Stirnseite aufweist, die mit einer Arm-Stirnseite (11) des Arms (8) verbunden ist.

7. Blocklageranordnung nach Anspruch 6, **dadurch gekennzeichnet, dass** der Träger (6, 7) mindestens eine langlochartige Durchgangsöffnung (16, 17) aufweist, die sich im Wesentlichen in Längsrichtung des Trägers (6, 7) erstreckt, wobei ein Fügeelement (14, 15) durch einen Steg (18) zwischen der Durchgangsöffnung (16, 17) und der Träger-Stirnseite geführt ist.

8. Blocklageranordnung nach einem der Ansprüche 1 bis 7, **dadurch gekennzeichnet, dass** das Knotenelement (5) einen Korpus (19) aufweist, der als Gussteil ausgebildet ist.

9. Blocklageranordnung nach einem der Ansprüche 1 bis 8, **dadurch gekennzeichnet, dass** das Knotenelement (5) eine Aufstandsfläche (21) mit einer Bohrung (22) aufweist.

10. Blocklageranordnung nach einem der Ansprüche 1 bis 9, **dadurch gekennzeichnet, dass** das Knotenelement (5) an seiner in Schwerkraftrichtung unteren Seite eine Öffnung (24) aufweist, durch die hindurch ein Klappenbetätigungsmechanismus auf die Klappe (23) wirkt.

11. Blocklageranordnung nach einem der Ansprüche 1 bis 10, **dadurch gekennzeichnet, dass** die Klappe (23) durch ein im Knotenelement (24) befestigtes Klappenhalteelement (25) im Knotenelement (5) gehalten ist, das eine Ausnehmung (26) aufweist, die die Klappe (23) aufnimmt, wenn die Klappe (23) aus einer Halteposition in eine Freigabeposition verschwenkt ist.

12. Blocklageranordnung nach Anspruch 11, **dadurch gekennzeichnet, dass** das Klappenhalteelement (25) ein Widerlager für eine auf die Klappe wirkende Schließfeder (27) bildet.

13. Blocklageranordnung nach Anspruch 11 oder 12, **dadurch gekennzeichnet, dass** das Klappenhalteelement (25) über mindestens eine Stirnseite (11) übersteht.

## Claims

1. Block storage arrangement (1) having a plurality of container receiving spaces (2), a loading space (3) arranged under the container receiving spaces (2) and a frame arrangement (4) between the container receiving spaces (2) and the loading space (3), wherein a stand (20) is arranged and a container holding device is arranged between each container receiving space (2) and the loading space (3), which container holding device has a flap (23) which can be pivoted about a horizontal axis, **characterized in that** the frame arrangement (4) has junction elements (5) which are arranged at corners of the container receiving spaces (2), a node element (5) forming a standing device for the stand (20), two adjacent node elements (5) being releasably connected to a common carrier (6, 7) and the flap (23) being mounted in a node element (5).

2. Block storage arrangement according to claim 1, **characterized in that** a node element (5) is connected in a first direction via a first carrier (6) to an adjacent node element (5a) and is connected in a second direction via a second carrier (7) to another adjacent node element (5b).

3. Block storage arrangement according to claim 2, **characterized in that** the first carrier (6) is longer and thinner than the second carrier (7).

4. Block storage arrangement according to one of claims 1 to 3, **characterized in that** the node element (5) has an arm (8) for each carrier (6, 7) and the carrier (6, 7) is connected to the arm (8).

5. Block storage arrangement according to claim 4, **characterized in that** the node element (5) has a guide (9, 10) for the carrier (6, 7) on at least one arm (8).

6. Block storage arrangement according to claim 4 or 5, **characterized in that** the carrier (6, 7) has a carrier end face which is connected to an arm end face (11) of the arm (8).

7. Block storage arrangement according to claim 6, **characterized in that** the carrier (6, 7) has at least one slot-like through-opening (16, 17) which extends essentially in the longitudinal direction of the carrier support (6, 7), wherein a joining element (14, 15) is guided by a web (18) between the through-opening (16, 17) and the support end face.

8. Block storage arrangement according to one of claims 1 to 7, **characterized in that** the node element (5) has a body (19) which is designed as a cast element.

9. Block storage arrangement according to one of claims 1 to 8, **characterized in that** the node element (5) has a standing surface (21) with a bore (22).

10. Block storage arrangement according to one of the claims 1 to 9, **characterized in that** the node element (5) has, on its lower side in the direction of gravity, an opening (24) through which a flap-actuating mechanism acts on the flap (23).

11. Block storage arrangement according to one of claims 1 to 10, **characterized in that** the flap (23) is held in the node element (5) by a flap-holding element (25) which is fastened in the node element (24) which has a recess (26) that receives the flap (23) when the flap (23) is pivoted out of a holding position into a release position.

12. Block storage arrangement according to claim 11, **characterized in that** the flap holding element (25) forms an abutment for a closing spring (27) acting on the flap.

13. Block storage arrangement according to claim 11 or 12, **characterized in that** the flap holding element (25) projects beyond at least one end side (11).

## Revendications

1. Agencement d'entreposage en blocs (1) avec plusieurs espaces de logement pour conteneurs (2), un espace de chargement (3) disposé en dessous des espaces de logement pour conteneurs (2) et un agencement de cadre (4) entre les espaces de logement pour conteneurs (2) et l'espace de chargement (3), sachant qu'entre les espaces de logement pour conteneurs voisins (2) est disposé un montant (20) et entre chaque espace de logement pour conteneurs (2) et l'espace de chargement (3) est disposé un dispositif de maintien de conteneur, qui comporte un volet pivotable (23) autour d'un axe horizontal, **caractérisé en ce que** l'agencement de cadre (4) comporte des éléments de jonction (5), qui sont disposés aux angles des espaces de logement pour conteneurs (2), sachant qu'un élément de jonction (5) forme un dispositif d'appui pour le montant (20), deux éléments de jonction voisins (5) sont respectivement reliés de façon amovible à un support commun (6, 7) et le volet (23) est logé dans un élément de jonction (5).

2. Agencement d'entreposage en blocs selon la revendication 1, **caractérisé en ce qu'**un élément de jonction (5) est relié dans une première direction à un élément de jonction (5a) voisin par le biais d'un premier support (6) et est relié dans une deuxième direction à un autre élément de jonction voisin (5b) par le biais d'un deuxième support (7).

3. Agencement d'entreposage en blocs selon la revendication 2, **caractérisé en ce que** le premier support (6) est plus long et plus mince que le deuxième support (7).

4. Agencement d'entreposage en blocs selon l'une quelconque des revendications 1 à 3, **caractérisé en ce que** l'élément de jonction (5) comporte pour chaque support (6, 7) un bras (8) et le support (6, 7) est relié au bras (8).

5. Agencement d'entreposage en blocs selon la revendication 4, **caractérisé en ce que** l'élément de jonction (5) comporte sur au moins un bras (8) un guidage (9, 10) pour le support (6, 7).

6. Agencement d'entreposage en blocs selon la revendication 4 ou 5, **caractérisé en ce que** le support (6, 7) comporte une face avant de support, qui est reliée à une face avant de bras (11) du bras (8).

7. Agencement d'entreposage en blocs selon la revendication 6, **caractérisé en ce que** le support (6, 7) comporte au moins une ouverture de passage de type trou oblong (16, 17), qui s'étend pour l'essentiel en direction longitudinal du support (6, 7), sachant qu'un élément d'assemblage (14, 15) est guidé par une nervure (18) entre l'ouverture de passage (16, 17) et la face avant de support.

8. Agencement d'entreposage en blocs selon l'une quelconque des revendications 1 à 7, **caractérisé en ce que** l'élément de jonction (5) comporte un corps de structure (19), qui est constitué sous la forme d'une pièce moulée.

9. Agencement d'entreposage en blocs selon l'une quelconque des revendications 1 à 8, **caractérisé en ce que** l'élément de jonction (5) comporte une surface de contact (21) avec un alésage (22).

10. Agencement d'entreposage en blocs selon l'une quelconque des revendications 1 à 9, **caractérisé en ce que** l'élément de jonction (5) comporte sur son côté inférieur en direction de la force de gravité une ouverture (24) à travers laquelle un mécanisme d'actionnement de volet agit sur le volet (23).

11. Agencement d'entreposage en blocs selon l'une quelconque des revendications 1 à 10, **caractérisé en ce que** le volet (23) est maintenu dans l'élément de jonction (5) par un élément de maintien de volet (25) fixé dans l'élément de jonction (24), qui comporte un évidement (26), qui loge le volet (23), lorsque le volet (23) est pivoté d'une position de maintien à une position de libération.

12. Agencement d'entreposage en blocs selon la revendication 11, **caractérisé en ce que** l'élément de maintien de volet (25) forme une contre-butée pour un ressort de fermeture (27) agissant sur le volet.

13. Agencement d'entreposage en blocs selon la revendication 11 ou 12, **caractérisé en ce que** l'élément de maintien de volet (25) dépasse au-dessus d'au moins une face avant (11).
